# EUROPEAN PATENT APPLICATION

(11) **EP 4 492 304 A1**
(43) Date of publication of application: **15.01.2025**
(21) Application number: 22930770.7
(22) Date of filing: 08.03.2022
(51) Int. Cl.: G06Q 10/06

(54) **MANAGEMENT DEVICE, MANAGEMENT METHOD, MANAGEMENT PROGRAM, AND RECORDING MEDIUM**

(71) Applicant: JGC Corporation, Nishi-ku Yokohama-shi Kanagawa 220-6001 (JP)
(72) Inventor: TANAKA Shota, Yokohama-shi, Kanagawa 220-6001 (JP); HASATANI Koshi, Yokohama-shi, Kanagawa 220-6001 (JP); NISHIKAWA Yuto, Yokohama-shi, Kanagawa 220-6001 (JP); KOJIMA Kazuyuki, Yokohama-shi, Kanagawa 220-6001 (JP)
(74) Representative: EIP
(86) International application number: PCT/JP2022/009993
(87) International publication number: WO 2023/170785

(57) **Abstract**

Provided is a management apparatus being an apparatus for managing a project through use of work packages being work units, the management apparatus including: a setting unit configured to create a work package in which a work and a product of the work are associated with each other; and a generation unit configured to generate a list of candidate work packages each being a candidate of a predecessor work package of the work package based on a product required for execution of the work of the work package, wherein the setting unit is configured to set a candidate work package selected from the list as the predecessor work package of the work package.

## Description

### Technical Field

This disclosure relates to a management apparatus, a management method, a management program, and a recording medium.

### Background Art

Hitherto, the progress of a project is managed by schedule management software. For example, in Patent Literature 1, there is described a progress status management apparatus in which a user sets an anteroposterior relation between processes of a project on a screen.

### Citation List

### Patent Literature

[PTL 1] JP 2009-116806 A

### Summary of Invention

### Technical Problem

Incidentally, there is known a method of managing a project through use of work packages. Also in this management method, it is required to set an anteroposterior relation between work packages. In order for a user to set the anteroposterior relation between the work packages of the project as in the progress status management apparatus as described in Patent Literature 1, the user is required to grasp all anteroposterior relations between those work packages. However, there are a plurality of work packages in a large-scale project, and hence it is difficult for the user to grasp all the anteroposterior relations between those work packages.

This disclosure describes a management apparatus, a management method, a management program, and a recording medium that enable an anteroposterior relation between work packages in a project to be set in a simple manner.

### Solution to Problem

According to one aspect of this disclosure, there is provided a management apparatus being an apparatus for managing a project through use of work packages being work units. The management apparatus includes: a setting unit configured to create a work package in which a work and a product of the work are associated with each other; and a generation unit configured to generate a list of candidate work packages each being a candidate of a predecessor work package of the work package based on a product required for execution of the work of the work package. The setting unit is configured to set a candidate work package selected from the list as the predecessor work package of the work package.

According to another aspect of this disclosure, there is provided a management method being a method of managing a project through use of work packages being work units. The management method includes: creating a work package in which a work and a product of the work are associated with each other; generating a list of candidate work packages each being a candidate of a predecessor work package of the work package based on a product required for execution of the work of the work package; and setting a candidate work package selected from the list as the predecessor work package of the work package.

According to still another aspect of this disclosure, there is provided a management program being a program for causing a computer to manage a project through use of work packages being work units. The management program is a program for causing the computer to execute: creating a work package in which a work and a product of the work are associated with each other; generating a list of candidate work packages each being a candidate of a predecessor work package of the work package based on a product required for execution of the work of the work package; and setting a candidate work package selected from the list as the predecessor work package of the work package.

According to yet another aspect of this disclosure, there is provided a recording medium being a computer-readable recording medium having recorded thereon a management program for causing a computer to manage a project through use of work packages being work units. The management program is a program for causing the computer to execute: creating a work package in which a work and a product of the work are associated with each other; generating a list of candidate work packages each being a candidate of a predecessor work package of the work package based on a product required for execution of the work of the work package; and setting a candidate work package selected from the list as the predecessor work package of the work package.

In the above-mentioned management apparatus, management method, management program, and recording medium, a list of candidate work packages is generated based on a product required for execution of a work of a work package, and a candidate work package selected from the list is set as a predecessor work package of the work package. The list of candidate work packages is generated while the product required for execution of the work of the work package is taken into consideration, and hence it is possible to increase the possibility that another work package directly affecting the work of the work package is set as the predecessor work package. Therefore, even when a user does not know an anteroposterior relation between work packages, it is possible to set the anteroposterior relation between the work packages in a project in a simple manner.

In some embodiments, the generation unit may be configured to generate the above-mentioned list based on information that enables a product input by a user to be identified. In this case, the product required for execution of the work of the work package is input by the user, and hence it is possible to increase the possibility that an appropriate work package is extracted as the candidate work package.

In some embodiments, the generation unit may be configured to generate the above-mentioned list based on a recommended condition which is set in advance. In this case, the list of candidate work packages is generated without user involvement, and hence the burden on the user can be reduced.

In some embodiments, the setting unit may be configured to update the recommended condition based on a relation between the work package and the predecessor work package. In this case, the recommended condition is updated through use of the actually set relation between the work package and the predecessor work package. Therefore, it is possible to increase the possibility that an appropriate work package is extracted as the candidate work package.

In some embodiments, the setting unit may be configured to set the candidate work package selected by a user from the above-mentioned list displayed on a display apparatus, as the predecessor work package of the work package. In this case, the user selects the predecessor work package, and hence it is possible to increase the possibility that an appropriate work package is set as the predecessor work package.

In some embodiments, the management apparatus may further include a forecast unit configured to forecast whether a delay occurs in the work of the work package. The forecast unit may be configured to forecast whether the delay occurs based on a required date of a product required for execution of a work of a successor work package of the work package and a forecast finish date on which the work of the work package is forecast to be finished. For example, even when the forecast finish date of the work package is delayed a little bit from an original plan, the successor work package is not affected as long as the forecast finish date is before the required date. With the above-mentioned configuration, the occurrence of a delay is forecast while the forecast finish date and the required date of the work package are taken into consideration, and hence it is possible to forecast a delay affecting the successor work package.

In some embodiments, the forecast unit may be configured to further forecast whether the above-mentioned delay causes a delay in the successor work package. The delay occurring in the work package may cause a delay also in the successor work package. With the above-mentioned configuration, it is further forecast whether a delay occurs in the successor work package, and hence the range of the influence of the delay can be determined.

In some embodiments, the setting unit may be configured to create the work package by assigning work package identification information that enables the work package to be identified to the work package. The work package identification information may be information that enables the work of the work package and the product of the work to be identified. In this case, it is possible to identify the work of the work package and the product of the work only by setting the work package identification information. Therefore, data related to the work package can be simplified.

### Advantageous Effects of Invention

According to each aspect and each embodiment of this disclosure, it is possible to set the anteroposterior relation between work packages in a project in a simple manner.

### Brief Description of Drawings

FIG. 1 is a configuration diagram for schematically illustrating a management system including a management apparatus according to one embodiment of this disclosure.
FIG. 2 is a hardware configuration diagram of the management apparatus illustrated in FIG. 1.
FIG. 3 is a block diagram for illustrating a functional configuration of the management apparatus illustrated in FIG. 1.
FIG. 4 is a table for showing an example of a work package table.
FIG. 5 is a diagram for illustrating an engineering work package (EWP).
FIG. 6 is a table for showing an example of a component table.
FIG. 7 is a sequence diagram for illustrating an example of a work package creation method in the management system illustrated in FIG. 1.
FIG. 8 is a view for illustrating an example of a list screen.
FIG. 9 is a sequence diagram for illustrating an example of a predecessor work package setting method in the management system illustrated in FIG. 1.
FIG. 10 is a view for illustrating an example of a setting screen.
FIG. 11 is a view for illustrating an example of a selection screen.
FIG. 12 is a flowchart for illustrating an example of a schedule management method performed by the management apparatus illustrated in FIG. 1.
FIG. 13 is a diagram for illustrating an example of anteroposterior relations between work packages and a delay status.
FIG. 14 is a diagram for illustrating another example of anteroposterior relations between work packages and a delay status.
FIG. 15 is a diagram for illustrating a configuration of a management program recorded in a recording medium.

### Description of Embodiments

A detailed description is now given of an embodiment of this disclosure with reference to the accompanying drawings. In the description of the drawings, the same components are denoted by the same reference symbols, and a redundant description thereof is omitted.

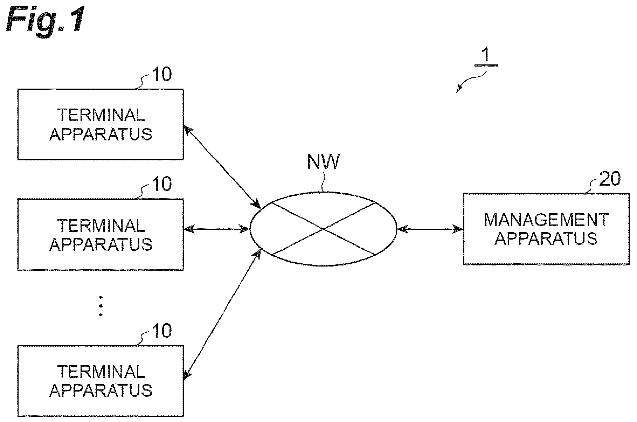

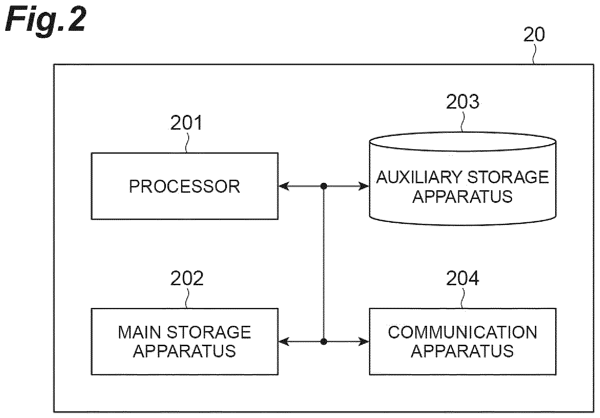

First, a management system including a management apparatus according to one embodiment of this disclosure is described with reference to FIG. 1 and FIG. 2. FIG. 1 is a configuration diagram for schematically illustrating the management system including the management apparatus according to the one embodiment of this disclosure. FIG. 2 is a hardware configuration diagram of the management apparatus illustrated in FIG. 1.

The management system 1 illustrated in FIG. 1 is a system for managing a project of building (constructing) an installation object. Examples of the installation object include a plant in a field of oil/gas and a plant in a field of infrastructure. Examples of the plant in the oil/gas field include a petroleum refinery plant, a gas treatment plant, a natural gas liquefying plant, a petrochemical plant, and a chemical product manufacturing plant. Examples of the plant in the infrastructure field include a thermal power generation plant, an atomic power generation plant, and a renewable energy power generation plant. The project may include three phases, which are engineering, procurement, and construction.

The management system 1 uses, for example, Advanced Work Packaging (AWP) to manage a project. The AWP is a method of managing a project through use of work packages. The work package is a work unit. Details of a work, a man-hour, a cost, resources, a schedule, and the like are assigned to the work package. Examples of the work package include an engineering work package (EWP), a procurement work package (PWP), a construction work package (CWP), and an installation work package (IWP). The EWP is a work unit of the engineering. The PWP is a work unit of the procurement. The CWP is a work unit of the construction. The IWP is obtained by subdividing the CWP. The following description is provided by mainly referring to an EWP as a work package handled by the management system 1.

The management system 1 includes one or a plurality of terminal apparatus 10 and a management apparatus 20. The terminal apparatus 10 and the management apparatus 20 are connected to each other for communication through a communication network NW. The communication network NW may be any one of a wired network and a wireless network. Examples of the communication network NW include the Internet, a mobile communication network, and a wide area network (WAN).

The terminal apparatus 10 is used by a user and executes various types of procedures based on an operation by the user. Examples of the terminal apparatus 10 include a desktop computer, a laptop computer, a tablet terminal, and a smartphone. The user of the terminal apparatus 10 performs an operation related to a work package through use of, for example, a web-based application.

The management apparatus 20 is an apparatus for managing a project through use of work packages. The management apparatus 20 is constructed by an information processing apparatus such as a server apparatus.

As illustrated in FIG. 2, the management apparatus 20 may be physically constructed as a computer including hardware components such as a processor 201, a main storage apparatus 202, an auxiliary storage apparatus 203, and a communication apparatus 204. The management apparatus 20 may be constructed by one computer illustrated in FIG. 2, or may be constructed by a plurality of computers.

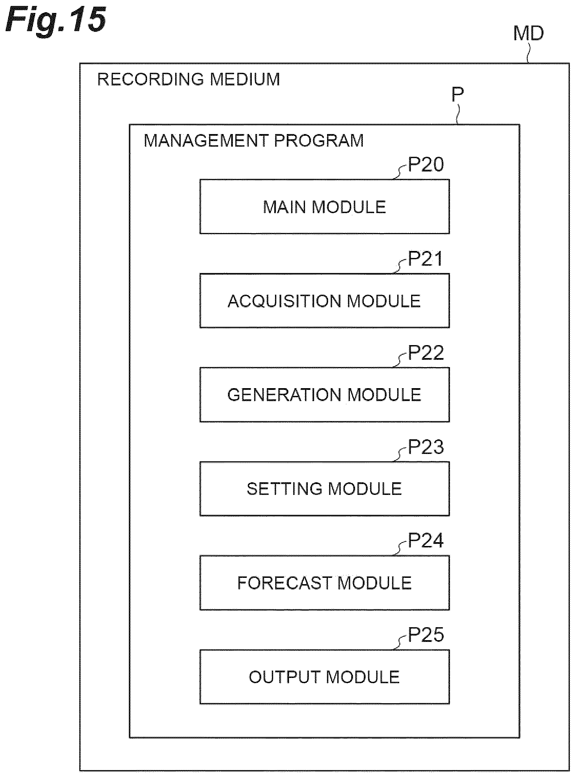

Examples of the processor 201 include a central processing unit (CPU). The main storage apparatus 202 is constructed by a random access memory (RAM), a read only memory (ROM), and the like. Examples of the auxiliary storage apparatus 203 include a semiconductor memory and a hard disk drive. The auxiliary storage apparatus 203 stores a management program P (see FIG. 15). The communication apparatus 204 is an apparatus for transmitting and receiving data to and from other apparatus through the communication network NW. The communication apparatus 204 is constructed by, for example, a network interface card (NIC) or a wireless communication module.

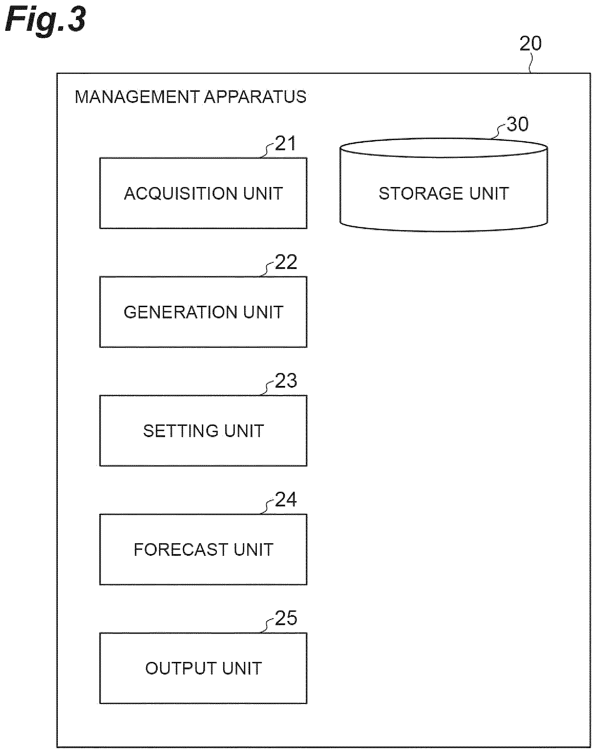

The processor 201 reads the management program P stored in the auxiliary storage apparatus 203 onto the main storage apparatus 202, and executes the management program P so that the respective pieces of hardware operate under the control of the processor 201, and data is read from and written to the main storage apparatus 202 and the auxiliary storage apparatus 203. As a result, respective function units of the management apparatus 20 illustrated in FIG. 3 are implemented. Each terminal apparatus 10 is also constructed by a computer similar to that of the management apparatus 20.

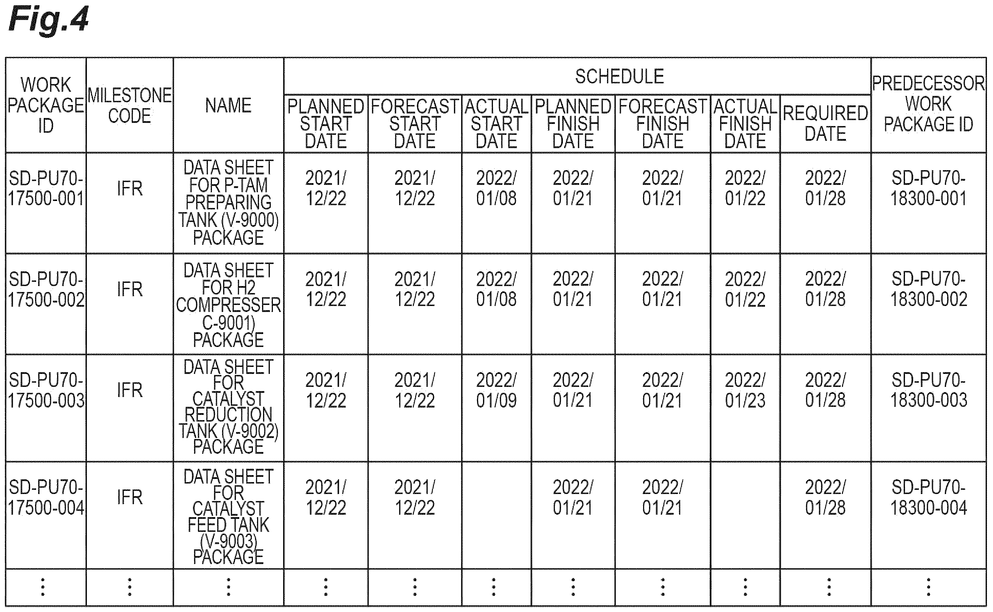

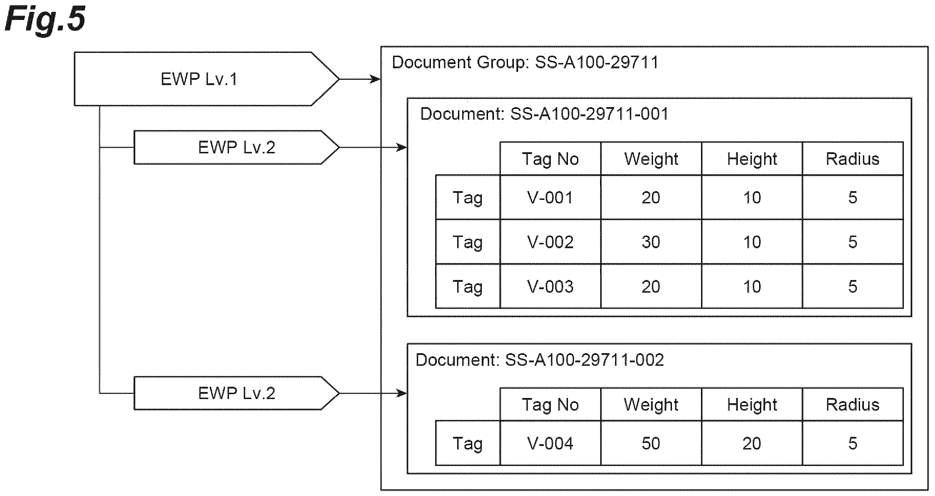

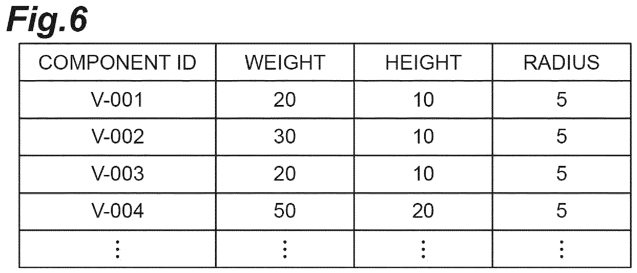

Next, a functional configuration of the management apparatus 20 is described with reference to FIG. 3 to FIG. 6. FIG. 3 is a block diagram for illustrating a functional configuration of the management apparatus illustrated in FIG. 1. FIG. 4 is a table for showing an example of a work package table. FIG. 5 is a diagram for illustrating an EWP. FIG. 6 is a table for showing an example of a component table. As illustrated in FIG. 3, the management apparatus 20 includes an acquisition unit 21, a generation unit 22, a setting unit 23, a forecast unit 24, an output unit 25, and a storage unit 30 as functional elements. A function (operation) of each function unit is described in detail when each method is described later, and hence the function of each function unit is briefly described below.

The storage unit 30 is a functional element that stores various types of information therein. The storage unit 30 stores, for example, a work package table and a component table therein. The work package table is a table for managing work package data. The work package data is information in which a work and a product of the work are associated with each other. In the work package data, a work object may be further associated. The work package data is set for each work package. As shown in FIG. 4, each piece of work package data includes a work package ID (work package identification information), a milestone code, a name, schedule information, and a predecessor work package ID.

The work package ID is identification information that enables a work package to be uniquely identified. The work package ID includes an action code, a project control work breakdown structure (PCWBS), and a functional work breakdown structure (FWBS). The action code is a code indicating a subdivision of a work category. Examples of the action code include "SD" and "SS." The action code "SD" indicates a work of creating a data sheet (of a device or the like). The action code "SS" indicates a work of creating specifications. The PCWBS is identification information that enables an area or a process division on a plant process to be uniquely identified.

The FWBS is information indicating a work category. That is, a work is identified by a combination of an FWBS and an action code. When a work is identified, the product of the work can be identified. Therefore, the work package ID can be said as information for identifying a work and the product of the work. In other words, the work package ID is information that enables a product to be uniquely identified.

Possible types of EWPs are described below. As illustrated in FIG. 5, EWPs are classified into a plurality of levels (levels 1 and 2). A level-1 EWP is set for a group of products. Therefore, the work package ID of a level-1 EWP includes an action code, a PCWBS, and an FWBS. The work package ID of a level-1 EWP can be said as information for identifying a work and a group of products of the work.

A level-2 EWP is an EWP obtained by subdividing a level-1 EWP and is set for each product. Therefore, the work package ID of a level-2 EWP includes an action code, a PCWBS, and an FWBS and also includes a sequence number. The sequence number is a number assigned in order to distinguish a plurality of level-2 EWPs obtained by subdividing one level-1 EWP from each other. The work package ID of a level-2 EWP can be said as information for identifying a work and one product of the work. The action code, the PCWBS, and the FWBS of the work package ID of a level-2 EWP are the same as the action code, the PCWBS, and the FWBS of the work package ID of the level-1 EWP to which the level-2 EWP belongs.

A level-2 EWP includes a component ID for identifying a work object. The component ID is information that enables a component to be uniquely identified and may be referred to as a tag number. In FIG. 5, a component is represented as "Tag," and a component ID is represented as "Tag No." Also in the following description, a tag may be used in place of a component. The component is an element forming an installation object. Examples of the component include a foundation, a steel structure, a piping, equipment, coating, a heat insulating material, an electrical component, instrumentation, and an underground structure.

Returning to FIG. 4, the description of the work package data is continued. The milestone code is information indicating a purpose of issuance. Examples of the milestone code include "IFA (Issue For Approval)" and "IFC (Issue For Construction)". IFA indicates issuance for approval. IFC indicates issuance for construction. The milestone code is set for each engineering phase. Therefore, when milestone codes of two work packages are different although work package IDs thereof are the same, the corresponding works are regarded as different works. Thus, the milestone code may be included in the work package ID. The name is information for indicating the product of the work package identified by the work package ID.

The schedule information includes a planned start date, a forecast start date, an actual start date, a planned finish date, a forecast finish date, an actual finish date, and a required date. The planned start date is a date on which the work of the work package identified by the work package ID is planned to be started. The forecast start date is a date on which the work of the work package identified by the work package ID is forecast to be started. The actual start date is an actual date on which the work of the work package identified by the work package ID has been started.

The planned finish date is a date on which the work of the work package identified by the work package ID is planned to be finished. The forecast finish date is a date on which the work of the work package identified by the work package ID is forecast to be finished. The actual finish date is an actual date on which the work of the work package identified by the work package ID has been finished. The required date is a date on which a product required for execution of a work of a successor work package is required.

The planned start date and the planned finish date are a schedule (planned schedule) initially presented to a customer in a contract or the like. Therefore, the planned start date and the planned finish date are not changed. The forecast start date and the forecast finish date are a schedule presented to the customer when the planned schedule is changed. Therefore, the forecast start date and the forecast finish date may be changed in accordance with the progress of a project.

The predecessor work package ID is identification information that enables a predecessor work package to be uniquely identified. The predecessor work package is a work package performed before the work package identified by the work package ID, and the work package identified by the work package ID cannot be started before the predecessor work package is finished. The product of the predecessor work package is used in the work package identified by the work package ID.

The component table is a table for managing component data. The component data is set for each component. Each piece of component data includes a component ID and shape information, as shown in FIG. 6**.** The shape information is information indicating the shape of the component identified by the component ID. The shape information includes, for example, the weight, the height, and the radius.

The acquisition unit 21 is a functional element that acquires various types of information. The acquisition unit 21 acquires, for example, information input to the terminal apparatus 10 by the user of the terminal apparatus 10 via the communication network NW.

The generation unit 22 is a functional element that generates display data for displaying various types of information on a display apparatus of the terminal apparatus 10. The generation unit 22 generates a list of candidate work packages for an object work package. The object work package is one work package selected from a plurality of work packages. The candidate work package is a candidate for the predecessor work package. The generation unit 22 generates the list of candidate work packages based on a product required for execution of the work of the object work package. The generation unit 22 may generate the list of candidate work packages based on information indicating a product input by the user of the terminal apparatus 10. The generation unit 22 may generate the list of candidate work packages based on a recommended condition which is set in advance.

The setting unit 23 is a functional element that creates a work package in which a work and a product of the work are associated with each other. The setting unit 23 creates the work package by assigning a work package ID to the work package. The setting unit 23 sets one candidate work package selected from the list of candidate work packages as the predecessor work package for the object work package. Specifically, the setting unit 23 sets a candidate work package selected by the user from the list of candidate work packages displayed on the display apparatus of the terminal apparatus 10, as the predecessor work package for the object work package.

The forecast unit 24 is a functional element that forecasts whether a work of a work package is delayed. The forecast unit 24 forecasts whether the above-mentioned delay occurs based on a required date of a product required for execution of a work of a successor work package and the forecast finish date of the work package. When having forecast that the delay occurs, the forecast unit 24 further forecasts whether the delay causes a delay in the successor work package of the work package.

The output unit 25 is a functional element that outputs various types of information. The output unit 25 outputs, for example, display data generated by the generation unit 22. The output unit 25 may output a forecast result.

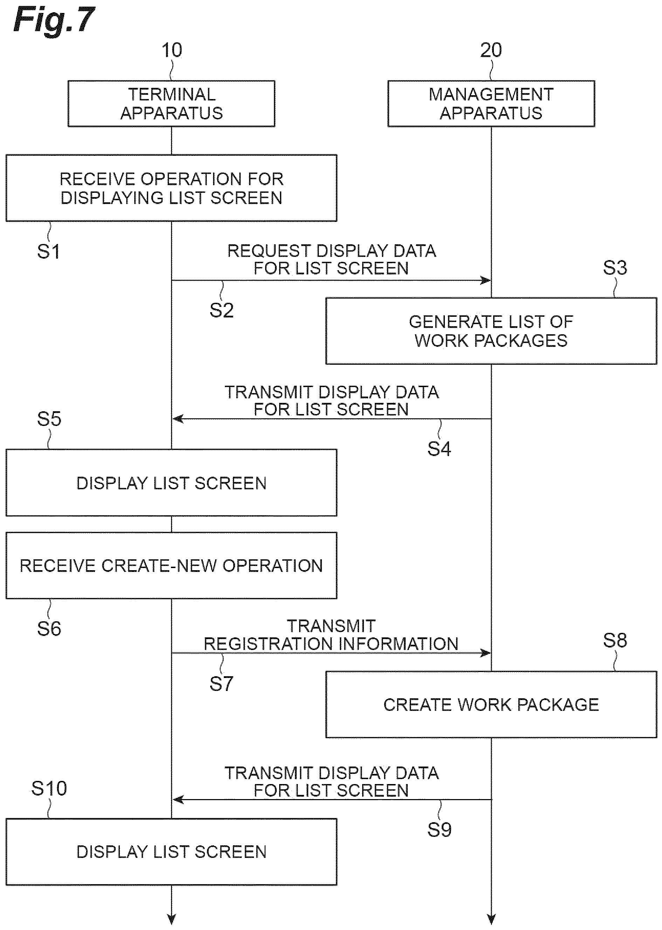

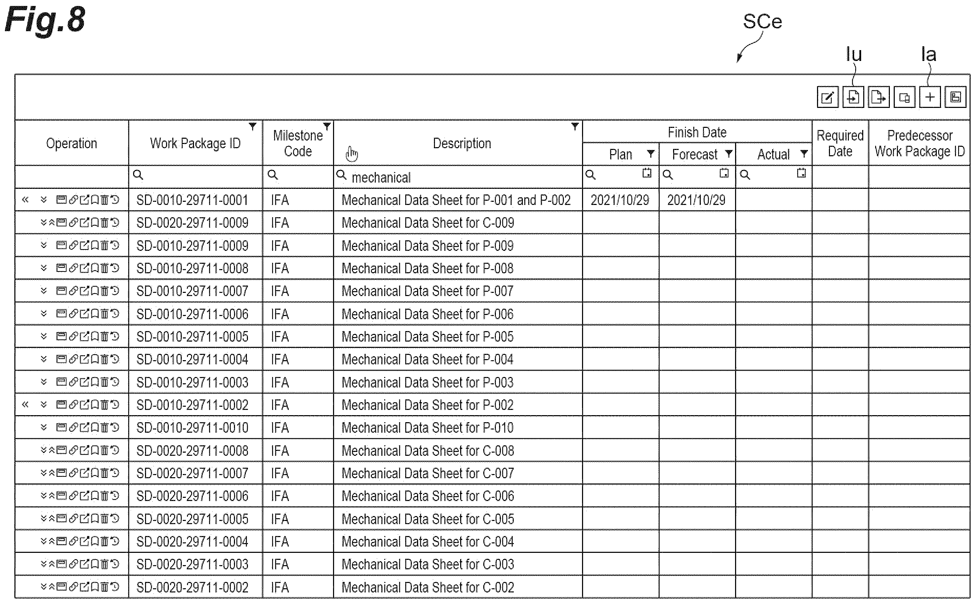

Next, a work package creation method is described with reference to FIG. 7 and FIG. 8. FIG. 7 is a sequence diagram for illustrating an example of a work package creation method in the management system illustrated in FIG. 1**.** FIG. 8 is a view for showing an example of a list screen. The series of procedures illustrated in FIG. 7 is started by activation of an application (management application) for performing an operation related to a work package on the terminal apparatus 10.

First, an operation for displaying a work-package list screen (a display operation) is performed by a user on the management application. When receiving the display operation (Step S1), the terminal apparatus 10 requests display data for displaying a list of work packages already created from the management apparatus 20 (Step S2). For example, the terminal apparatus 10 may request a list of all work packages already created or a list of work packages satisfying a predetermined condition. In this example, the terminal apparatus 10 requests a list of level-2 EWPs already created.

Subsequently, when receiving the above-mentioned request, the acquisition unit 21 of the management apparatus 20 outputs the request to the generation unit 22. The generation unit 22 then acquires work package data of the requested work package from the storage unit 30 (a work package table) and generates a list of the requested work packages based on the acquired work package data (Step S3). In this example, the generation unit 22 generates display data (for example, a Hypertext Markup Language (HTML) file) for displaying the list of work packages on the display apparatus of the terminal apparatus 10. The generation unit 22 then outputs the display data to the output unit 25, and the output unit 25 transmits the display data to the terminal apparatus 10 (Step S4).

Subsequently, when receiving the display data, the terminal apparatus 10 displays a work-package list screen on the display apparatus (Step S5). For example, work package data of each work package is displayed in a list form on a list screen SCe, as illustrated in FIG. 8. When an operation for creating a new work package (a create-new operation) is performed by the user on the list screen SCe, the terminal apparatus 10 receives this create-new operation (Step S6).

Specifically, when an icon Ia is clicked on the list screen SCe as illustrated in FIG. 8, a registration screen (not shown) for registering basic information on a work package is displayed. The icon Ia is an icon for creating one new work package. Then, a work package ID, a milestone code, and a name are input to predetermined portions on the registration screen by the user, and thus the create-new operation is performed. Alternatively, when an icon Iu is clicked on the list screen SCe, a screen (not shown) for uploading a file is displayed. A file with the work package ID, the milestone code, and the name of the new work package described therein is then uploaded on this screen, and thus the create-new operation is performed.

When receiving the create-new operation performed in Step S6, the terminal apparatus 10 transmits registration information for creating the new work package to the management apparatus 20 (Step S7). The registration information includes the work package ID, the milestone code, and the name.

Subsequently, when receiving the registration information, the acquisition unit 21 outputs the registration information to the setting unit 23. The setting unit 23 then creates a work package (Step S8). Here, "create a work package" means to newly create work package data corresponding to the new work package. Therefore, in Step S8, the setting unit 23 adds new work package data to the work package table stored in the storage unit 30. At this time, the setting unit 23 sets the work package ID, the milestone code, and the name included in the registration information as a work package ID, a milestone code, and a name of the work package data, respectively.

The generation unit 22 then generates display data for displaying a list of work packages on the display apparatus of the terminal apparatus 10, as in Step S3. The generation unit 22 then outputs the display data to the output unit 25, and the output unit 25 transmits the display data to the terminal apparatus 10 (Step S9). When receiving the display data, the terminal apparatus 10 displays the work-package list screen on the display apparatus (Step S10). This list screen includes the work package data of the new work package that has been added.

As a result, the series of procedures of the work package creation method is finished.

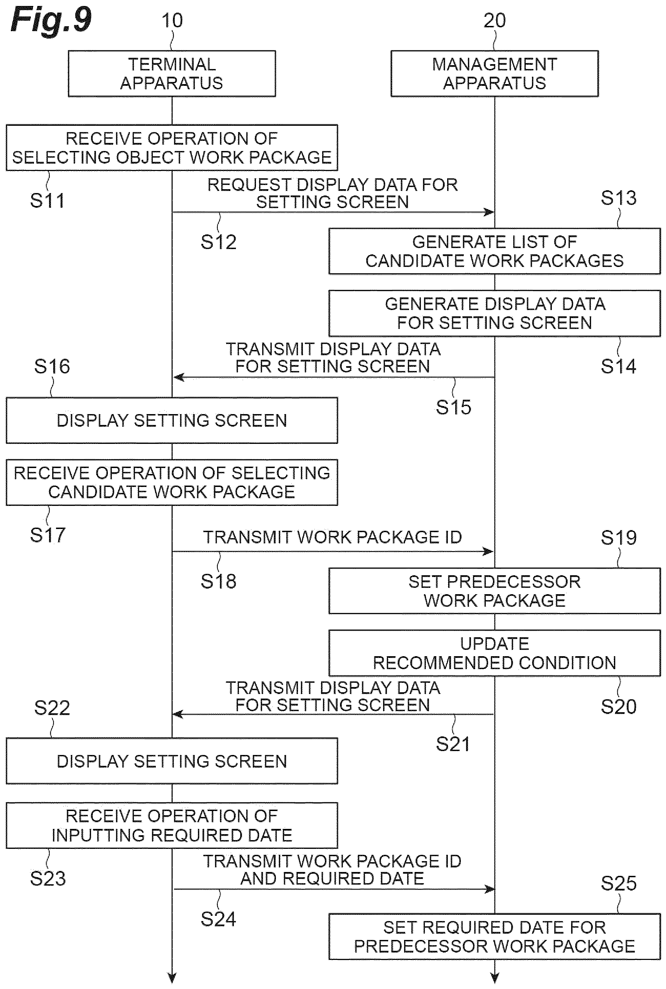

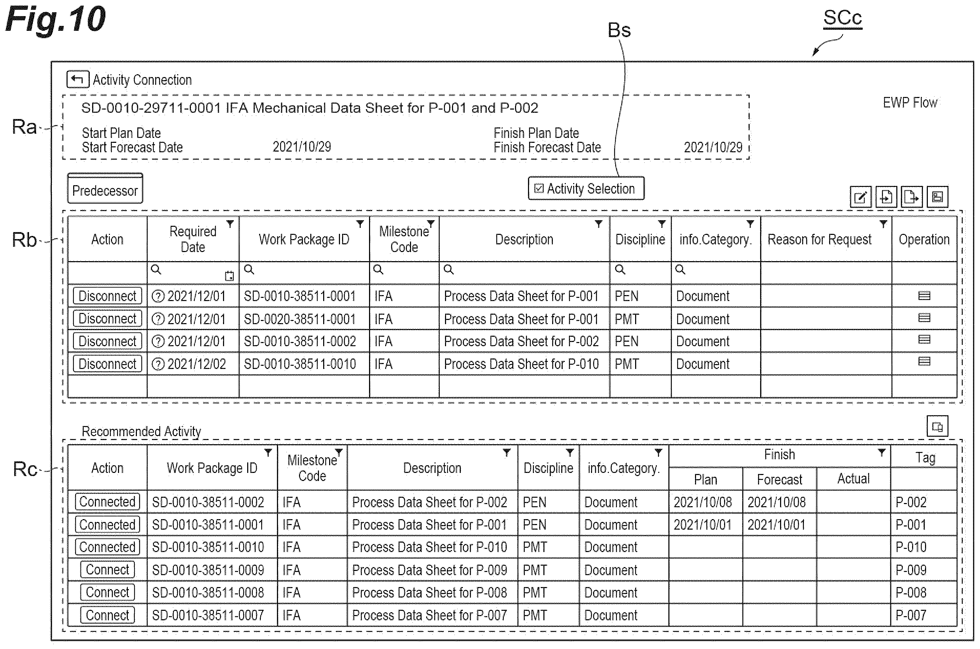

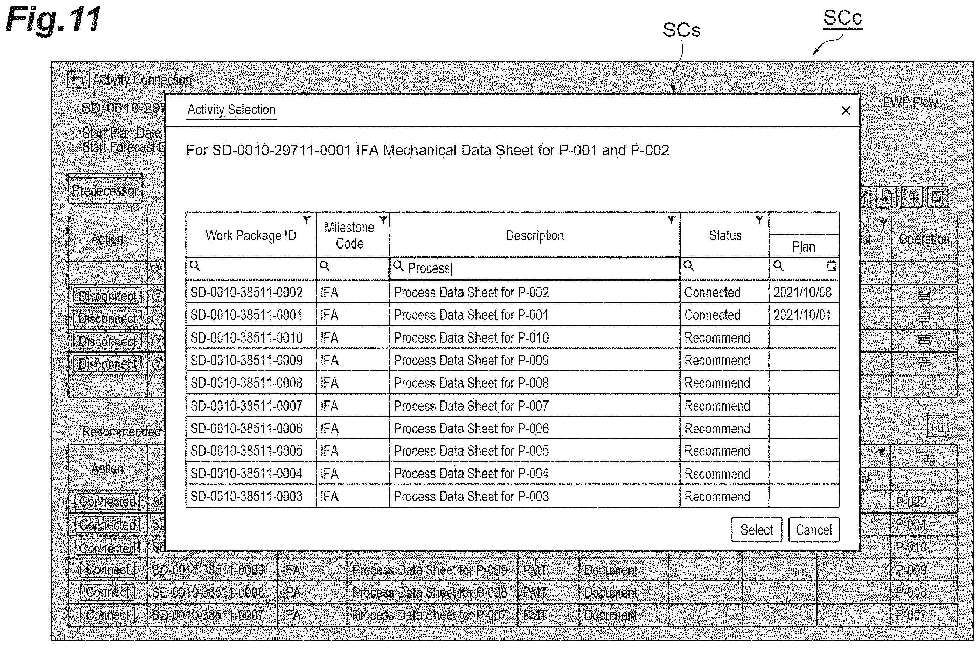

Next, a predecessor work package setting method is described with reference to FIG. 9 to FIG. 11. FIG. 9 is a sequence diagram for illustrating an example of a predecessor work package setting method in the management system illustrated in FIG. 1**.** FIG. 10 is a view for illustrating an example of a setting screen. FIG. 11 is a view for illustrating an example of a selection screen. The series of procedures illustrated in FIG. 9 is started under a state in which, on the terminal apparatus 10, the management application has been activated and the work-package list screen is displayed.

First, on the list screen, an operation of selecting any one of a plurality of work packages (hereinafter referred to as an "object work package") (a selection operation) is performed by the user. For example, among icons displayed in an operation column ("Operation") of the object work package on the list screen SCe shown in FIG. 8, an icon for setting a predecessor work package is clicked. The terminal apparatus 10 thus receives the selection operation (Step S11), and requests display data for displaying a setting screen for the object work package from the management apparatus 20 (Step S12).

Subsequently, when receiving the above-mentioned request, the acquisition unit 21 of the management apparatus 20 outputs the request to the generation unit 22. When receiving the above-mentioned request, the generation unit 22 then acquires work package data of the object work package from the work package table and generates a list of the candidate work packages (Step S13). In Step S13, for the object work package, the generation unit 22 extracts (work package data of) a candidate work package among a plurality of work packages already created and generates the list of the candidate work packages.

As an example of the candidate work package extraction processing, the generation unit 22 extracts a candidate work package from among the work packages already created based on a recommended condition which is set in advance. Examples of the recommended condition include the following conditions.

### <Condition 1>

The action code, the FWBS, and the milestone code of a work package match the action code, the FWBS, and the milestone code associated in advance with the action code, the FWBS, and the milestone code of the object work package.

### <Condition 2>

At least one of the following conditions is satisfied: (a) the component ID of a work package matches the component ID of the object work package; (b) the component ID of a work package matches the component ID associated in advance with the component ID of the object work package; or (c) the PCWBS of a work package matches the PCWBS of the object work package.

The generation unit 22 extracts work package data satisfying all the recommended conditions among all pieces of work package data included in the work package table, as work package data of the candidate work package. The recommended condition is set by the user on the above-mentioned management application. Specifically, one or more recommended conditions to be used for extracting the candidate work package is activated (set) among a plurality of recommended conditions.

For example, a combination of the action code, the FWBS, and the milestone code of a work package used in Condition 1 and the action code, the FWBS, and the milestone code of its predecessor work package and a combination of the component ID of a work package used in Condition 2 and the component ID of its predecessor work package are registered in advance. When a work is identified, a product is identified. Therefore, it can be said that the generation unit 22 generates the list of candidate work packages based on a product required for execution of the work of the object work package.

The generation unit 22 further generates a list of predecessor work packages already set for the object work package. Specifically, the generation unit 22 acquires work package data including the predecessor work package ID included in the work package data of the object work package as a work package ID from the work package table.

The generation unit 22 then generates display data for displaying a setting screen for the object work package based on the work package data of the object work package, the list of candidate work packages, and the list of predecessor work packages (Step S14). The generation unit 22 then outputs the display data to the output unit 25, and the output unit 25 transmits the display data to the terminal apparatus 10 (Step S15).

Subsequently, when receiving the display data, the terminal apparatus 10 displays the setting screen for the object work package on the display apparatus (Step S16). For example, a setting screen SCc includes a region Ra, a region Rb, and a region Rc, as illustrated in FIG. 10. The region Ra is a region for displaying various types of information on the object work package. For example, the work package ID, the milestone code, the name, the schedule information of the object work package are displayed in the region Ra. The region Rb is a region for displaying the list of predecessor work packages. In the region Rb, work package data of the work package already set as the predecessor work package of the object work package is displayed in a list form.

The region Rc is a region for displaying the list of candidate work packages. In the region Rc, work package data of the candidate work package for the object work package is displayed in a list form. A candidate work package for which "Connected" is displayed in the "Action" column is a work package already set as the predecessor work package.

Subsequently, an operation (selection operation) of selecting one candidate work package among a plurality of candidate work packages is performed by the user. For example, the user selects one candidate work package from the list of candidate work packages displayed in the region Rc on the setting screen SCc illustrated in FIG. 10. Specifically, the user clicks a button displayed in the "Action" column of the candidate work package. The terminal apparatus 10 thus receives the selection operation (Step S17) and transmits the work package ID of the selected candidate work package to the management apparatus 20 (Step S18).

Subsequently, when receiving the above-mentioned work package ID, the acquisition unit 21 of the management apparatus 20 outputs the work package ID to the setting unit 23. The setting unit 23 then sets the predecessor work package (Step S19) when receiving the work package ID. In Step S19, the setting unit 23 sets the selected candidate work package as the predecessor work package. Specifically, the setting unit 23 sets the work package ID of the selected candidate work package as the predecessor work package ID in the work package data of the object work package stored in the work package table.

Subsequently, the setting unit 23 updates the recommended condition based on the relation between the object work package and the predecessor work package (Step S20). Specifically, the setting unit 23 determines whether a combination of the action code, the FWBS, and the milestone code of the object work package and the action code, the FWBS, and the milestone code of the predecessor work package set in Step S19 has been already registered and, when the combination has not been registered, additionally registers the combination as a combination used in Condition 1 of the recommended conditions. When the combination has been already registered, the setting unit 23 does not update the recommended conditions.

The generation unit 22 then generates display data for displaying the setting screen for the object work package, as in Step S13 and Step S14. The generation unit 22 then outputs the display data to the output unit 25, and the output unit 25 transmits the display data to the terminal apparatus 10 (Step S21).

Subsequently, when receiving the display data, the terminal apparatus 10 displays the setting screen for the object work package on the display apparatus (Step S22). In the list of predecessor work packages on the setting screen, the work package data of the candidate work package selected in Step S17 has been added.

Subsequently, the required date for the predecessor work package is set by the user. For example, the user inputs the required date for the predecessor work package in the list of predecessor work packages displayed in the region Rb on the setting screen SCc illustrated in FIG. 10. Accordingly, the terminal apparatus 10 receives an operation of inputting the required date (Step S23), and transmits the required date thus input to the management apparatus 20 together with the work package ID of the predecessor work package (Step S24).

Subsequently, when receiving the work package ID and the required date, the acquisition unit 21 of the management apparatus 20 outputs the work package ID and the required date to the setting unit 23. The setting unit 23 then sets the required date for the predecessor work package (Step S24) when receiving the work package ID and the required date. Specifically, the setting unit 23 identifies work package data including the work package ID of the predecessor work package among the work package data included in the work package table, and sets the required date thus received as the required date in the work package data.

As a result, the series of procedures of the predecessor work package setting method is finished. In Step S23, for any predecessor work package included in the list of predecessor work packages, the required date may be input. Therefore, setting of the required date for the predecessor work package already set (Step S23 to Step S25) may be performed before Step S17 to Step S19.

In addition, in Step S13, the generation unit 22 may extract a work package including a keyword specified by the user among a plurality of work packages already generated, as the candidate work package. The keyword is information (a string of characters) that enables a product to be identified.

Specifically, when a button Bs is clicked on the setting screen SCc by the user, a selection screen SCs illustrated in FIG. 11 is displayed. On this selection screen SCs, the user inputs (specifies) a keyword with regard to a name, for example. The terminal apparatus 10 then transmits the input keyword to the management apparatus 20, and the generation unit 22 extracts a work package having a name including the keyword specified by the user from all pieces of work package data included in the work package table, as the candidate work package. The keyword may be input with regard to a work package ID. Both the name and the work package ID are information that enables a product to be identified, and hence it can be said that the keyword with regard to the name and the work package ID can identify a product.

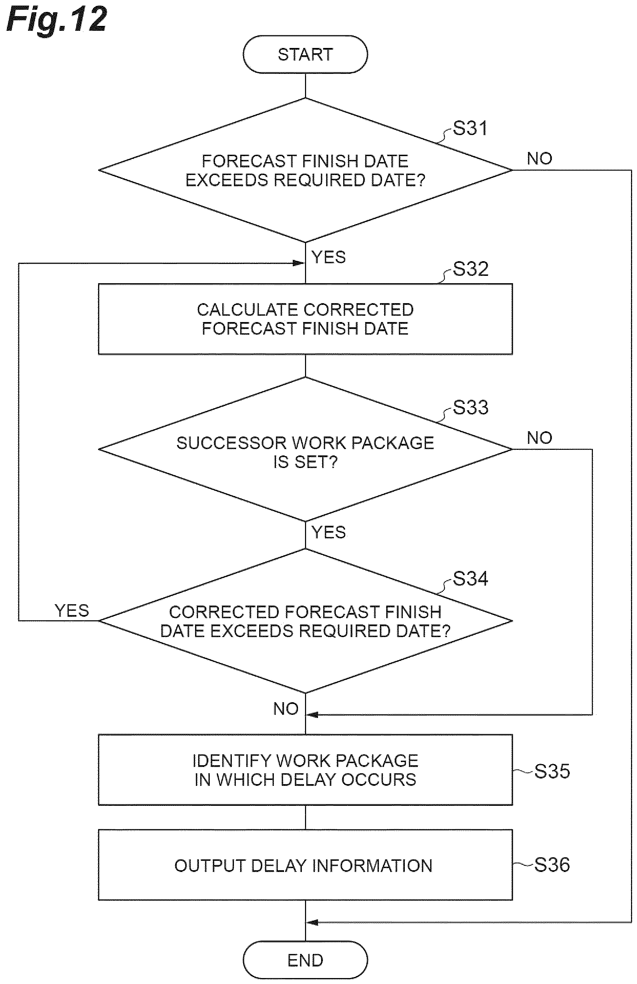

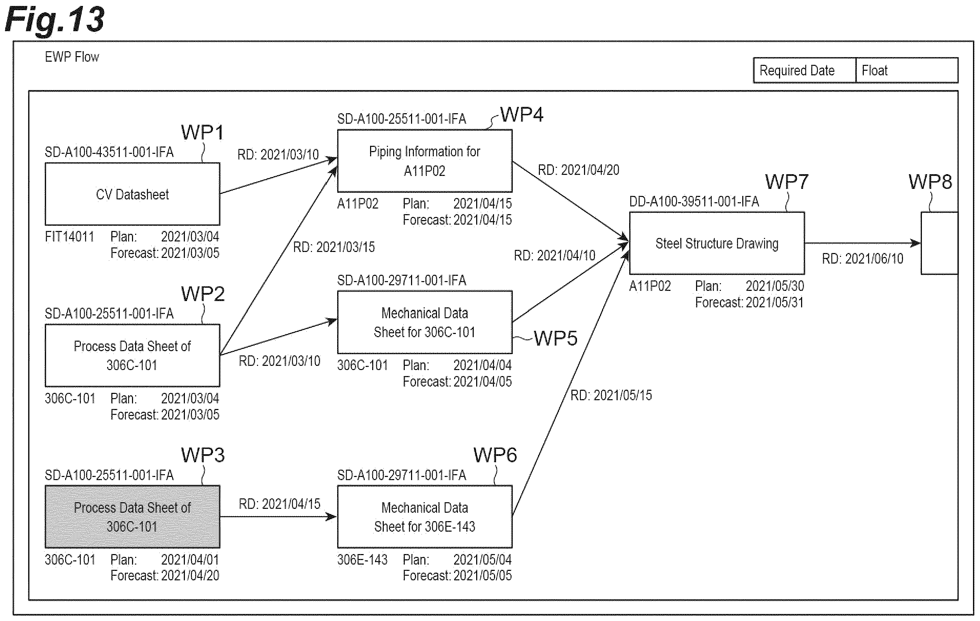

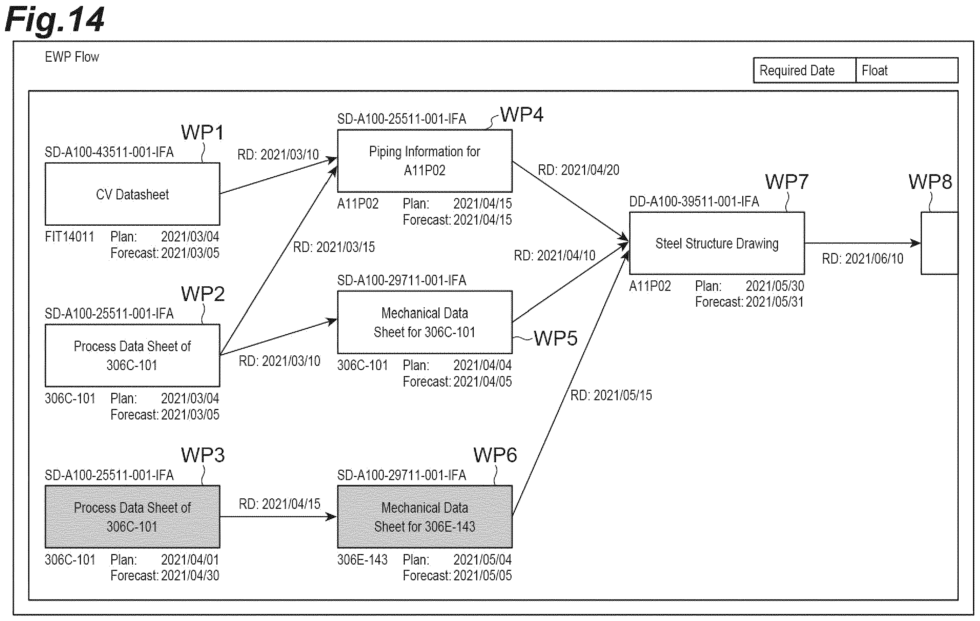

Next, a schedule management method in the management system 1 is described with reference to FIG. 12 to FIG. 14. FIG. 12 is a flowchart for illustrating an example of a schedule management method performed by the management apparatus illustrated in FIG. 1. FIG. 13 is a diagram for illustrating an example of anteroposterior relations between work packages and a delay status. FIG. 14 is a diagram for illustrating another example of anteroposterior relations between work packages and a delay status. The series of procedures illustrated in FIG. 12 is started by, for example, update of the forecast finish date or the required date.

First, the forecast unit 24 compares the forecast finish date of the object work package and the required date for the object work package with each other to determine whether the forecast finish date exceeds the required date (Step S31). When the forecast finish date of a work package has been updated, the work package is set as the object work package. That is, the forecast unit 24 compares the required date for the work package required by the successor work package and the updated forecast finish date with each other. When the required date for a predecessor work package has been updated, the predecessor work package is set as the object work package. That is, the forecast unit 24 compares the forecast finish date of the predecessor work package and the updated required date with each other.

When it has been determined that the forecast finish date does not exceed the required date (NO in Step S31), the forecast unit 24 forecasts that no delay occurs in the object work package. Therefore, the forecast unit 24 also forecasts that the update of the forecast finish date or the required date does not cause a delay in the entire project, and the series of procedures of the schedule management method is finished. Meanwhile, when it has been determined in Step S31 that the forecast finish date exceeds the required date (YES in Step S31), the forecast unit 24 forecasts that a delay occurs in the object work package.

The forecast unit 24 then corrects the forecast finish date of the successor work package to calculate a corrected forecast finish date (Step S32). For example, the forecast unit 24 calculates the corrected forecast finish date by adding the number of delay days to the forecast finish date of the successor work package. The number of delay days is the number of days by which the forecast finish date of the object work package is delayed from the required date for the object work package, and is the number of days corresponding to a difference between the required date for the object work package and the forecast finish date of the object work package.

Subsequently, the forecast unit 24 determines whether there is a successor work package set for the object work package (Step S33). When it has been determined that there is a successor work package set (YES in Step S33), the forecast unit 24 compares the corrected forecast finish date and the required date for the successor work package with each other, to thereby determine whether the corrected forecast finish date exceeds the required date (Step S34). When it has been determined that the corrected forecast finish date exceeds the required date (YES in Step S34), the forecast unit 24 forecasts that a delay occurs in the successor work package. In this case, the forecast unit 24 performs Step S32 to Step S34 again in order to determine whether a delay occurs in a further successor work package.

Meanwhile, when it has been determined that the corrected forecast finish date does not exceed the required date (NO in Step S34), the forecast unit 24 forecasts that no delay occurs in the successor work package. Therefore, the forecast unit 24 also forecasts that no delay occurs in a further successor work package.

When it has been determined in Step S33 that no successor work package is set (NO in Step S33) or it has been determined in Step S34 that the corrected forecast finish date does not exceed the required date (NO in Step S34), the forecast unit 24 identifies a work package in which a delay occurs (Step S35). Specifically, the forecast unit 24 identifies a work package for which it has been determined in Step S31 to Step S34 that a delay occurs, and outputs the work package ID of each work package together with the number of delay days to the output unit 25 as delay information.

Subsequently, when receiving the delay information, the output unit 25 outputs the delay information (Step S36). The output unit 25 transmits (outputs) the delay information to, for example, the terminal apparatus 10. The output unit 25 may transmit (output) the delay information to a person in charge of a division ("Discipline") in charge of the work package in which a delay occurs and a person in charge of a division in charge of the successor work package of the work package by email or the like. Consequently, the forecast finish date of the work package in which a delay occurs and the required date from the successor work package can be adjusted.

In Step S35, the forecast unit 24 may output the delay information to the generation unit 22. In this case, the generation unit 22 generates display data for displaying the delay information together with the anteroposterior relation between work packages, for example. The generation unit 22 then outputs the display data to the output unit 25, and the output unit 25 transmits the display data to the terminal apparatus 10. Then, when receiving the display data, the terminal apparatus 10 displays the delay information together with the anteroposterior relation between work packages on the display apparatus (see FIG. 13 and FIG. 14).

As a result, the series of procedures of the schedule management method is finished.

In the display examples illustrated in FIG. 13 and FIG. 14, anteroposterior relations between work packages (work packages WP1 to WP8) are visualized. Specifically, each work package is represented by a rectangular box, and the order of work packages is represented by an arrow. The (left) one of two work packages connected with the arrow, which is located at the starting point of the arrow, is a predecessor work package of the (right) work packages located at the tip of the arrow. In other words, the right work package is a successor work package of the left work package. On the lower right side of each box, the planned finish date ("Plan") and the forecast finish date ("Forecast") of the work package are displayed. The required date ("RD") is displayed near the arrow. This required date is a date on which the product of the left work package is required in the right work package.

In the example illustrated in FIG. 13, the forecast finish date (March 5, 2021) of the work package WP1 is before the required date (March 10, 2021), and hence it is forecast that no delay occurs in the work package WP1. Meanwhile, the forecast finish date (April 20, 2021) of the work package WP3 exceeds the required date (April 15, 2021) by five days. Therefore, it is forecast that a five-day delay occurs in the work package WP3.

Further, the forecast finish date of the work package WP6 being the successor work package of the work package WP3 is May 5, 2021, and hence the corrected forecast finish date of the work package WP6 becomes May 10, 2021. This corrected forecast finish date is before the required date (May 15, 2021), and hence it is forecast that no delay occurs in the work package WP6. Therefore, the delay occurring in the work package WP3 does not affect the work package WP6 and its subsequent work packages.

In the example illustrated in FIG. 14, the forecast finish date (April 30, 2021) of the work package WP3 exceeds the required date (April 15, 2021) by 15 days. Therefore, it is forecast that a 15-day delay occurs in the work package WP3. Further, the corrected forecast finish date of the work package WP6 becomes May 20, 2021, which exceeds the required date (May 15, 2021) by five days. Therefore, it is forecast that a five-day delay occurs in the work package WP6.

Further, the forecast finish date of the work package WP7 being the successor work package of the work package WP6 is May 31, 2021, and hence the corrected forecast finish date of the work package WP7 becomes June 5, 2021. This corrected forecast finish date is before the required date (June 10, 2021), and hence it is forecast that no delay occurs in the work package WP7. Therefore, the delay occurring in the work package WP3 affects the work package WP6 and its preceding work packages, but does not affect the work package WP7 and its subsequent work packages.

For example, the user is visually notified of the occurrence of a delay by setting a display mode of a work package for which the occurrence of a delay is forecast as a display mode different from a display mode of a work package for which no delay is forecast.

The management method performed by the management apparatus 20 includes the procedures performed by the management apparatus 20 in the work package creation method illustrated in FIG. 7, the procedures performed by the management apparatus 20 in the predecessor work package setting method illustrated in FIG. 9, and the schedule management method illustrated in FIG. 12.

Next, referring to FIG. 15, description is given of the management program P for causing a computer to function as the management apparatus 20 and a recording medium MD for recording the management program P. FIG. 15 is a diagram for illustrating a configuration of the management program recorded in the recording medium.

As illustrated in FIG. 15, the management program P includes a main module P20, an acquisition module P21, a generation module P22, a setting module P23, a forecast module P24, and an output module P25. The main module P20 is a part that integrally controls processing relating to the project management. Functions implemented by executing the acquisition module P21, the generation module P22, the setting module P23, the forecast module P24, and the output module P25 are the same as the functions of the acquisition unit 21, the generation unit 22, the setting unit 23, the forecast unit 24, and the output unit 25 in the embodiment described above, respectively.

The management program P is supplied in the computer-readable recording medium MD such as a compact disc-read only memory (CD-ROM), a digital versatile disc-read only memory (DVD-ROM), and a semiconductor memory. The management program P may be supplied as a data signal through the communication network **NW.**

In the management apparatus 20, the management method, the management program P, and the recording medium having the management program P recorded therein described above, a list of candidate work packages is generated based on a product required for execution of a work of an object work package, and a candidate work package selected from the list is set as a predecessor work package of the object work package. The list of candidate work packages is generated while the product required for execution of the work of the object work package is taken into consideration, and hence it is possible to increase the possibility that another work package directly affecting the work of the object work package is set as the predecessor work package. Therefore, even when a user does not know the anteroposterior relation between work packages, it is possible to set the anteroposterior relation between work packages in a project in a simple manner.

In the above-mentioned embodiment, the generation unit 22 may generate a list of successor work packages based on information (a keyword) that enables a product input by a user to be identified. In this configuration, the product required for execution of the work of the object work package is input by the user. Therefore, it is possible to increase the possibility that an appropriate work package is extracted as the candidate work package.

In the above-mentioned embodiment, the generation unit 22 generates a list of successor work packages based on a recommended condition which is set in advance. In this configuration, the list of candidate work packages is generated without user involvement, and hence the burden on the user can be reduced.

In the above-mentioned embodiment, the setting unit 23 updates the recommended condition based on the relation between the object work package and the predecessor work package. With this configuration, the recommended condition is updated through use of the actually set relation between the object work package and the predecessor work package. Therefore, it is possible to increase the possibility that an appropriate work package is extracted as the candidate work package.

In the above-mentioned embodiment, the setting unit 23 sets a candidate work package selected by the user from the list of candidate work packages displayed on the display apparatus of the terminal apparatus 10, as the predecessor work package of the object work package. With this configuration, the user selects the predecessor work package, and hence it is possible to increase the possibility that an appropriate work package is set as the predecessor work package.

For example, even when the forecast finish date of the object work package is delayed a little bit from an original plan (the planned finish date), the successor work package is not affected as long as the forecast finish date is before the required date. In the above-mentioned embodiment, the forecast unit 24 forecasts whether a delay occurs in the work of the object work package based on the required date of a product required for execution of the work required by the successor work package of the object work package and the forecast finish date of the object work package. With this configuration, the occurrence of a delay is forecast while the forecast finish date and the required date of the object work package are taken into consideration, and hence it is possible to forecast a delay affecting the successor work package.

The delay occurring in the object work package may cause a delay also in the successor work package. In the above-mentioned embodiment, the forecast unit 24 further forecasts whether the delay in the object work package causes a delay in the successor work package of the object work package. With this configuration, it is further forecast whether a delay occurs in the successor work package, and hence the range of the influence of the delay occurring in the object work package can be determined.

The work package ID is information that enables a work of a work package and a product of the work to be identified. Therefore, it is possible to identify the work of the work package and the product thereof only by setting the work package ID. Thus, work package data is not required to include information for identifying a work and information for identifying a product separately from each other, and hence the work package data can be simplified.

In order to identify in which work package a product obtained by a work of a work package is used, it is required to grasp the work details and the like in other work packages. However, it is difficult to grasp the work details of all work packages in a large-scale project. Meanwhile, the work package ID is information that enables a product to be identified, and hence it is possible to identify the product output from the work package without grasping the work details of the work package. Therefore, the anteroposterior relation between work packages in a project can be set in a simple manner.

The management apparatus, the management method, the management program, and the recording medium according to this disclosure are not limited to those of the above-mentioned embodiment.

For example, the management apparatus 20 may be constructed by one apparatus joined physically or logically, or may be constructed by a plurality of apparatus physically or logically separated from one another. For example, the management apparatus 20 may be implemented by a plurality of computers distributed on the communication network NW as in the cloud computing.

The management apparatus 20 is not required to forecast the delay of the schedule. In this case, the management apparatus 20 is not required to include the forecast unit 24. The work package table and the component table may be stored in a storage apparatus outside the management apparatus 20. In this case, the management apparatus 20 is not required to include the storage unit 30.

The configurations of the work package table and the component table are not limited to the configurations in the above-mentioned embodiment. The configuration of each table may be changed by a publicly known method. For example, each table may be constructed by a relational database.

### Reference Signs List

1 management system, 10 terminal apparatus, 20 management apparatus, 21 acquisition unit, 22 generation unit, 23 setting unit, 24 forecast unit, 25 output unit, MD recording medium, P management program

## Claims

1. A management apparatus for managing a project through use of work packages being work units, the management apparatus comprising:
a setting unit configured to create a work package in which a work and a product of the work are associated with each other; and
a generation unit configured to generate a list of candidate work packages each being a candidate of a predecessor work package of the work package based on a product required for execution of the work of the work package,
wherein the setting unit is configured to set a candidate work package selected from the list as the predecessor work package of the work package.

2. The management apparatus according to claim 1, wherein the generation unit is configured to generate the list based on information that enables a product input by a user to be identified.

3. The management apparatus according to claim 1, wherein the generation unit is configured to generate the list based on a recommended condition which is set in advance.

4. The management apparatus according to claim 3, wherein the setting unit is configured to update the recommended condition based on a relation between the work package and the predecessor work package.

5. The management apparatus according to any one of claims 1 to 4, wherein the setting unit is configured to set the candidate work package selected by a user from the list displayed on a display apparatus, as the predecessor work package of the work package.

6. The management apparatus according to any one of claims 1 to 5, further comprising a forecast unit configured to forecast whether a delay occurs in the work of the work package,
wherein the forecast unit is configured to forecast whether the delay occurs based on a required date of a product required for execution of a work of a successor work package of the work package and a forecast finish date on which the work of the work package is forecast to be finished.

7. The management apparatus according to claim 6, wherein the forecast unit is configured to further forecast whether the delay causes a delay in the successor work package.

8. The management apparatus according to any one of claims 1 to 7,
wherein the setting unit is configured to create the work package by assigning work package identification information that enables the work package to be identified to the work package, and
wherein the work package identification information is information that enables the work of the work package and the product of the work to be identified.

9. A management method of managing a project through use of work packages being work units, the management method comprising:
creating a work package in which a work and a product of the work are associated with each other;
generating a list of candidate work packages each being a candidate of a predecessor work package of the work package based on a product required for execution of the work of the work package; and
setting a candidate work package selected from the list as the predecessor work package of the work package.

10. A management program for causing a computer to manage a project through use of work packages being work units, the management program causing the computer to execute:
creating a work package in which a work and a product of the work are associated with each other;
generating a list of candidate work packages each being a candidate of a predecessor work package of the work package based on a product required for execution of the work of the work package; and
setting a candidate work package selected from the list as the predecessor work package of the work package.

11. A computer-readable recording medium having recorded thereon a management program for causing a computer to manage a project through use of work packages being work units, the management program being a program for causing the computer to execute:
creating a work package in which a work and a product of the work are associated with each other;
generating a list of candidate work packages each being a candidate of a predecessor work package of the work package based on a product required for execution of the work of the work package; and
setting a candidate work package selected from the list as the predecessor work package of the work package.
